# EUROPÄISCHE PATENTSCHRIFT

(11) **EP 3 102 488 B1**
(45) Veröffentlichungstag und Bekanntmachung des Hinweises auf die Patenterteilung: **26.04.2017**
(21) Anmeldenummer: 15708707.3
(22) Anmeldetag: 24.01.2015
(51) Int. Cl.: B64C 13/06, B64D 3/00

(54) **GESCHLEPPTER AKTIVER FLUGKÖRPER ZUR ERMITTLUNG VON MESSDATEN**
TOWED ACTIVE FLYING OBJECT FOR COLLECTING MEASUREMENT DATA
CORPS VOLANT ACTIF TRACTÉ DESTINÉ À LA COLLECTE DE DONNÉES DE MESURE

(30) Priorität: 07.02.2014 DE 102014001873
(43) Veröffentlichungstag der Anmeldung: 14.12.2016
(73) Patentinhaber: Alfred-Wegener-Institut Helmholtz-Zentrum für Polar- und Meeresforschung, 27570 Bremerhaven (DE)
(72) Erfinder: HERBER, Andreas, 27634 Nordholz (DE); KALMBACH, Dirk, 27576 Bremerhaven (DE); GERDES, Rüdiger, 27612 Loxstedt (DE); WATSON, James Bradley, LOK 1B0 Brechin, Ontario (CA)
(86) Internationale Anmeldenummer: PCT/DE2015/000021
(87) Internationale Veröffentlichungsnummer: WO 2015/117586

(56) Entgegenhaltungen:
- WO-A1-2013/076708
- FR-A1- 2 521 098
- JP-A- H09 159 397
- US-A- 4 014 481

## Beschreibung

Die Erfindung bezieht sich auf einen zylinderförmigen aktiven Flugkörper zur Ermittlung von Messdaten gemäß Anspruch 1, der mittels eines Tragseils, das im Mittenbereich des Flugkörpers einklinkbar ist, von einem angetriebenen Fluggerät durch die Luft schleppbar ist, zumindest mit
- Sensoren zur Ermittlung der Messdaten und der Flugposition des Flugkörpers,
- zwei im Mittenbereich des Flugkörpers angeordneten Tragflächen,
- mehreren im Heckbereich des Flugkörpers radial um seine Längsachse angeordneten Windleitflächen und mit
- elektrischen Verstelleinrichtungen für gegenüberliegende erste Windleitflächen und zweite Windleitflächen, wobei die Verstelleinrichtung der beiden ersten Windleitflächen als Höhenruder und die Verstelleinrichtung der beiden zweiten Windleitflächen als Seitenruder ausgebildet ist.

Die Möglichkeit für berührungsfreie Fernerkundungen mit einem angetriebenen Fluggerät, in der Regel ein Flugzeug oder ein Hubschrauber, in der atmosphärischen Grenzschicht (PBL - Planetary Boundary Layer, Höhenbereich zwischen 0 und 300 m) ist durch auftretende natürliche und künstliche Hindernisse stark begrenzt. Unter guten Sichtbedingungen (keine tiefen Wolken oder wolkenlos) können Messungen mit dem Flugzeug in 60 m (200 feet), unter schlechten Sichtbedingungen (tiefe Wolken, Nebel, Regen etc.) nur bis maximal 300 m (1000 feet) Höhe, also nur am Rand der PBL, durchgeführt werden. Bereits unterhalb von 150 m ("restricted category") bestehen hohe Sicherheitsauflagen für den Flugbetrieb. Oft sind aber Messungen unmittelbar über dem Untergrund, beispielsweise direkt über einer Meereisoberfläche, oder unterhalb einer Wolkendecke ohne direkten Sichtkontakt zum Fluggerät von besonderem Interesse. Für solche Zwecke werden Flugkörper eingesetzt, die nicht über einen eigenen Antrieb verfügen (im Gegensatz zu Drohnen), sondern von dem Fluggerät, das in einer unkritischen Höhenzone oberhalb 300 m fliegt, durch die Luft gezogen werden. Die generelle Flugrichtung des Flugkörpers wird damit von dem Fluggerät bestimmt. Dabei ist der Flugkörper über ein Seil mit dem Fluggerät verbunden. Über eine Winde am Fluggerät wird das Seil ausgebracht und eingeholt, sodass in der Luft die Distanz zwischen dem Flugkörper und dem Fluggerät veränderbar ist. Das ausgefahrene Seil kann eine Länge von bis zu 4000 m haben. Dabei ist zu unterscheiden zwischen passiven Flugkörpern, die keine eigene Manövrierfähigkeit besitzen und an einem Lastenseil, das in der Regel am Bug des Flugkörpers eingeklinkt wird, durch die Luft gezogen werden, und aktiven Flugkörpern, die an einem Tragseil, das im Mittenbereich des Flugkörpers eingeklinkt wird, vom Fluggerät geschleppt werden und - im Rahmen der durch das Fluggerät vorgegebenen generellen Flugrichtung - eine eigene Manövrierfähigkeit aufweisen.

Solche Flugkörper werden beispielsweise in den Polargebieten eingesetzt, um Informationen über die Meereisoberfläche und -dickenverteilung zu erhalten. Aber auch atmosphärische Messungen (Gehalt an BC -"BlackCarbon", Aerosole (Partikelkonzentrationen, chemische Zusammensetzung), atmosphärische Spurengase (CO, CO₂, SO₂, NOx) sowie Informationen über die meteorologischen Bedingungen und über die Beschaffenheit der Wolken), geophysikalische Prospektionen und Umweltüberwachungen (Emissionen von Schiffen und Kraftwerken sowie Landminendetektion) in zugänglichen Siedlungs- bzw. Industriegebieten, aber auch besonders unzugänglichen Gebieten (Polargebiete, Ozeane, Gebirge, Regenwälder, Wüsten) können mit solchen Flugkörpern durchgeführt werden.

Es kann in einer Höhe (Flugkörper) oder auch synchron in zwei Höhen (Fluggerät und Flugkörper) innerhalb der PBL gemessen werden. Mit einem aktiven Flugkörper können darüber hinaus noch vertikale Messprofile in unterschiedlichen Flughöhen bis dicht über dem Untergrund bei guten Sichtverhältnissen ermittelt werden. Bei schlechten Sichtverhältnissen ist dies jedoch mit bekannten aktiven Flugkörpern nicht möglich, da ein möglicher Bodenkontakt des Flugkörpers nicht ausgeschlossen werden kann. Die größte und gefahrvollste Schwierigkeit besteht bei geschleppten Flugkörpern immer in der Seilkopplung zwischen Fluggerät und Flugkörper, insbesondere bei sehr niedrigen Flughöhen, die aber ohnehin nur mit aktiven Flugkörpern erreicht werden können. Die vorliegende Erfindung beschäftigt sich mit solchen aktiven Flugkörpern mit eigener Manövrierfähigkeit und den bei deren Nutzung entstehenden Sicherheitsaspekten, insbesondere bei extremen Tiefflügen im Hindernisbereich und unter schlechten Sichtbedingungen.

### Stand der Technik

Für den Überblick auf dem gesamten technischen Gebiet sind zunächst beispielsweise die US 2002/01900162 A1, die US 6 765 383 B1 und die Veröffentlichung "A new airborne tandem platform for collocated measurements of microphysical cloud and radiation properties" von W. Frey et al. (in Atmos. Meas. Tech., 2, 147-158, 2009) zu nennen, die sich aber ausschließlich mit passiven Flugkörpern beschäftigen.

Aus der JP 2000-292097 A ist ein seilgebundener aktiver Flugkörper bekannt, der als Luftziel für militärische Übungszwecke eingesetzt wird. Er ist zylinderförmig ausgebildet und verfügt über vier axiale Windleitflächen, die vor dem Mittenbereich orthogonal zueinander angeordnet sind und als Tragflächen angesehen werden können, und vier axiale Windleitflächen im Heckbereich, die ebenfalls orthogonal zueinander angeordnet sind und der Flugstabilisierung dienen. Nur die Tragflächen sind drehbar auf Radialachsen angeordnet und dienen dem Manövrieren des Flugkörpers. Ein ähnlicher Flugkörper ist aus der US 4 014 481 A bekannt. Hierbei sind die Tragflächen jedoch nicht auf Achsen drehbar angeordnet, sondern weisen integrierte, sogenannte "Störklappen" auf, die mit Steuerklappen vergleichbar sind und über Torsionsstangen durch Erregung von Elektromagneten auslenkbar sind. Bei nichterregten Elektromagneten kehren sie in ihre Ausgangslage zurück. Durch eine Seilbefestigung am Bug des Flugkörpers ist jedoch nur eine äußerst beschränkte Manövrierfähigkeit des Flugkörpers gegeben. Die Störklappen sollen schnelle, nahezu ruckartige Bewegungen des Flugkörpers erzeugen, um ein schwieriges Luftziel zu simulieren. Aus der US 2013/0062464 A1 ist ein geschleppter Flugkörper bekannt, der mittels diverser Rudereinrichtungen manövrierbar ist. Dabei weist der Flugkörper mehrere Tragflächen auf, die kreuzförmig, kastenförmig oder lamellenförmig angeordnet sind. Dadurch soll eine stabile Manövrierbarkeit erreicht werden. Diese wird aber durch Schleppen des Flugkörpers am Bug wiederum stark eingeschränkt.

Weiterhin ist aus dem Stand der Technik die Präsentation "Measurements of Air-Sea Fluxes with a Controlled Towed Vehicle (CTV)" von D. Khelif et al. bekannt. Die Präsentation wurde im Rahmen des 2010 Ocean Sciences Meetings des UNOLS Scientific Committee for Oceanographic Aircraft Research in der Town Hall Session in Portland, Oregon, USA, am 22.02.2010 veröffentlicht (im Internet abgerufen unter der URL https://www.unols.org/sites/default/files/201002scoap_09.pdf).

Bei dem bekannten CTV handelt es sich um einen zylinderförmigen Flugkörper (ca. 2,2 m Länge, 25 cm Durchmesser, 40 kg Gewicht) zur berührungsfreien Ermittlung von Messdaten aus dem Luftraum. Dazu wird ein Tragseil im Mittenbereich des Flugkörpers eingeklinkt und der Flugkörper von einem Flugzeug als angetriebenem Fluggerät durch die Luft geschleppt. Der bekannte Flugkörper verfügt über verschiedene Sensoren zur Ermittlung der Messdaten, beispielsweise meteorologische Sensoren (Druck- und Temperatursensor, Hygrometer und Windmesser sowie Spurengassensorik) und zur Ermittlung der Position des Flugkörpers in der Luft, beispielsweise radargestützter Höhenmesser, GPS-System, Navigationssystem und Videokamera. Vorausschauende Sensoren zur Positionsbestimmung des Flugkörpers sind nicht vorgesehen. Zur elektrischen Energieversorgung aller elektrischen Komponenten an Bord weist der bekannte Flugkörper Akkumulatoren auf. Im Mittenbereich des Flugkörpers sind zwei kurze Tragflächen ("Stummelflügel") angeordnet, die über eine elektrische Verstelleinrichtung um eine Radialachse drehbar sind. Durch Verdrehung der Tragflächen kann eine Höhenänderung des Flugkörpers herbeigeführt werden. Ist das Tragseil voll ausgefahren, fliegt der Flugkörper im Gleichgewicht in einem bestimmten Abstand zum Fluggerät, wobei das Tragseil aufgrund des Luftwiderstandes gekrümmt verläuft. Werden in dieser Ausgangslage die Tragflächen verdreht, kann der Flugkörper durch Abtrieb noch weiter absinken (unter Straffung des Tragseils). Somit kann die Flughöhe des Flugkörpers noch weiter verringert werden. Minimal kann der Flugkörper bei 10 m über dem offenen Ozean - einem Gebiet ohne natürliche Hindernisse - fliegen. Im abgesenkten Zustand kann der Flugkörper durch entgegengesetztes Drehen der Tragflächen wieder aufsteigen. Zur konstruktiven Flugstabilisierung weist der bekannte Flugkörper weiterhin mehrere in seinem Heckbereich radial um seine Längsachse angeordnete Windleitflächen auf, dabei sind zwei erste Windleitflächen parallel zu den Tragflächen angeordnet. Diese Windleitflächen sind nicht verstellbar und starr am Flugkörper angeordnet. Sie dienen nicht der Änderung der Flugposition. Lateral ist das CTV somit nicht eigenständig steuerbar. Weiterhin verfügt der bekannte Flugkörper über eine computergestützte Steuereinrichtung, die ein automatisches Flugkontrollsystem zur selbsttätigen Steuerung der vertikalen Flugposition (Flughöhe) des Flugkörpers aufweist. Durch Veränderung ausschließlich der Flughöhe können Hindernisse gesteuert überflogen werden, wobei diese Steuerung aber durch den Operator an Bord des schleppenden Fluggeräts vorgenommen wird. Ist ein Überflug nicht oder nicht mehr möglich, sind zum Abwerfen des Flugkörpers Sollbruchstellen im Tragseil und manuell betätigbare Schneidvorrichtungen im Windenbereich am Fluggerät vorgesehen. Das Flugkontrollsystem umfasst außerdem ein bei einer Fehlfunktion aktiviertes Fehlfunktionsmodul, mit dem die Verstelleinrichtungen der Tragflächen in die Ausgangsposition gestellt werden, sodass der Flugkörper wieder in seine höhere Fluglage im Gleichgewicht gelangt. Eine Aussage über die Art der Fehlfunktion oder über die Ausgestaltung des Fehlfunktionsmoduls wird nicht gemacht. Es ist davon auszugehen, dass in Notfällen der Flugkörper abgeworfen wird, was zu großen Gefahren und Kosten führen kann.

Der der Erfindung nächstliegende Stand der Technik ist aus der FR 2 521 098 A1 bekannt. Offenbart wird ein zylinderförmiger, aktiver Flugkörper zur Ermittlung von Messdaten, der mittels eines Tragseils, das im Mittenbereich des Flugkörpers einklinkbar ist, von einem angetriebenen Fluggerät durch die Luft schleppbar ist, zumindest mit Sensoren zur Ermittlung der Messdaten und der Flugposition des Flugkörpers, zwei im Mittenbereich des Flugkörpers angeordneten Tragflächen, mehreren im Heckbereich des Flugkörpers radial um eine Längsachse angeordneten Windleitflächen und mit elektrischen Verstelleinrichtungen für gegenüberliegende erste Windleitflächen und zweite Windleitflächen, wobei die Verstelleinrichtung der beiden ersten Windleitflächen als Höhenruder und die Verstelleinrichtung der beiden zweiten Windleitflächen als Seitenruder ausgebildet ist. In der FR 2 521 098 wird der Flugkörper aber vom angetriebenen Fluggerät aus gesteuert. Desweiteren sind die Tragflächen starr am Flugkörper angeordnet.

In der JP H09 159397 A wird ein ähnlicher zylinderförmiger aktiver Flugkörper zum Schleppen durch ein angetriebenes Fluggerät offenbart, bei dem jedoch die Tragflächen im hinteren Bereich angeordnet sind.

Ein Fehlfunktionssystem für das Kontrollsystem eines Flugzeugs ist beispielsweise aus der EP 1 422 680 B1 bekannt. Dabei kann im Notfall die zentrale Steuerung von ausgewählten Systemen außer Kraft gesetzt und das Flugzeug in eine finale Annäherungsausrichtung gebracht werden. Außerdem ist allgemein aus der EP 2 617 647 A2 ein Stellsystem zum Einsatz bei Aktoren beispielsweise in der Luftfahrt bekannt, das bei einem Notfall in deaktiviertem Zustand einen definierten Zustand einnimmt und dort verriegelt, sodass dieser Zustand auch im Falle unbeabsichtigter oder fehlerhafter Ansteuerung eingehalten wird. Das System ist über verschiedene Kinematikglieder zwischen der Verriegelungsposition (erste Totpunktlage) und einer Entriegelungsposition (zweite Totpunktlage) reversibel umschaltbar, wobei es aber auch über die Totpunktlagen hinausgefahren werden kann. Dadurch ist keine zuverlässige Verrieglung gewährleistet. Schließlich ist aus der US 6 111 327 A noch ein Fehlfunktionsmodul bekannt, das bei einem Aufprall ein Fahrzeug stromlos schaltet. Dazu weist es einen federbelasteten Klingenhebel auf, der einen Schalter umstellt.

### Aufgabenstellung

Ausgehend von dem nächstliegenden Stand der Technik ist die Aufgabe für die vorliegende Erfindung darin zu sehen, den eingangs beschriebenen gattungsgemäßen Flugkörper so weiterzubilden, dass seine Manövrierfähigkeit verbessert und dabei zuverlässiger gestaltet werden kann. Die erfindungsgemäße Lösung für diese Aufgabe ist dem Anspruch 1 zu entnehmen. Vorteilhafte Weiterbildungen der Erfindung werden in den Unteransprüchen aufgezeigt und im Folgenden im Zusammenhang mit der Erfindung näher erläutert.

Der erfindungsgemäße Flugkörper ist erfindungsgemäß dadurch gekennzeichnet, dass die Tragflächen verstellbar ausgebildet sind und die elektrische Verstelleinrichtung der Tragflächen als Querruder ausgebildet ist. Dadurch ergibt sich - gegenüber den feststehende Tragflächen bei dem bekannten CTV - eine verbesserte Manövrierfähigkeit des Flugkörpers in der Flughöhe. Bei dem erfindungsgemäßen Flugkörper sind weiterhin auch die Verstelleinrichtungen der verstellbaren Windleitflächen von dem automatischen Flugkontrollsystem angesteuert. Durch das automatisch verstellbare Höhenruder und das automatisch verstellbare Seitenruder weist der erfindungsgemäße Flugkörper zusammen mit dem Querruder eine völlige Manövrierfähigkeit in allen drei Raumachsen auf. Ein gesteuertes optimales Ausweichen gegenüber Hindernissen durch kombinierte Änderungen der vertikalen und der lateralen Fluglage ist sicher gewährleistet. Diese optimale Ausweicheigenschaft, die vor allem ein sehr niedriges Überfliegen des Untergrunds im Bereich von Hindernissen (5 -10 m über der Oberfläche) ermöglicht, ist zudem bei dem erfindungsgemäßen Flugkörper automatisiert, sodass der Flugkörper alle Manövrierbewegungen vollständig selbstständig und autark ausführt und nicht von außen gesteuert ist. Dazu umfasst das automatische Flugkontrollsystem ein Ausweichmodul, das dazu ausgebildet ist, die Quer-, Höhen- und Seitenruder automatisch so zu verstellen, dass der geschleppte Flugkörper Hindernissen, die von den Sensoren ermittelt werden, durch optimale Änderungen seiner Flugposition selbstständig ausweicht.

Desweiteren umfasst das automatische Flugkontrollsystem des Flugkörpers erfindungsgemäß ein Stabilisierungsmodul, das dazu ausgebildet ist, die Quer-, Höhen- und Seitenruder automatisch so zu verstellen, dass die Flugposition des geschleppten Flugkörpers stabilisiert ist, wobei beim Einholen des Flugkörpers unter das Fluggerät in Abhängigkeit vom Abstand des Flugkörpers zum Fluggerät die Messfrequenz der Sensoren erhöht ist. Durch das Stabilisierungsmodul werden Pendelbewegungen kompensiert. Der Flugkörper bleibt in einer stabilen Fluglage und schlingert nicht. Das vollständige Einholen des Flugkörpers zum Fluggerät während des Flugs zur Vorbereitung auf die Landung des Fluggeräts stellt ein großes Sicherheitsrisiko dar. Luftströmungen und -turbulenzen unterhalb des Fluggeräts können zu Pendelbewegungen des Flugkörpers führen, durch die das Fluggerät beschädigt werden kann. Außerdem verstärkt sich die Pendelbewegung mit der Verkürzung des Tragseils aufgrund der Impulserhaltung. Besonders kritisch wird es ab einem Abstand von ungefähr 5 m zum Fluggerät. Um die stärker werdenden Pendelbewegungen schon im Ansatz kompensieren zu können, kann bevorzugt und vorteilhaft ab diesem Abstand die Messfrequenz erhöht werden, insbesondere auf 5 Hz. Außerhalb des Abstandes mit erhöhter Messfrequenz beträgt die normale Messfrequenz in der Regel 1 Hz, d.h. eine Messung pro Sekunde.

Das automatisierte eigenständige Umfliegen von detektierten Hindernissen stellt bei dem erfindungsgemäßen Flugkörper bereits einen relevanten Sicherheitsaspekt dar, der die Piloten des Fluggeräts bedeutsam entlastet. In der Praxis existiert bislang kein geschleppter Flugkörper, der vollständig in allen drei Raumrichtungen manövrieren kann. Hier sind immer die Piloten gefordert, durch Änderung der Flughöhe des Fluggeräts oder der Länge des Tragseils oder sogar durch Abwerfen des Flugkörpers in Gefahrensituationen zu reagieren. Zur weiteren Verbesserung der Sicherheit ist der erfindungsgemäße Flugkörper darüber hinaus aber noch dadurch gekennzeichnet, dass das Fehlfunktionsmodul ein elektromechanisches Fehlfunktionssystem umfasst, das bei einem Wegfall seiner elektrischen Energieversorgung automatisch aktiviert ist und mit dem die Quer-, Höhen- und Seitenruder in ihre unausgelenkte Ausgangslage bewegt und dort verriegelt werden. Dabei ist bei der Erfindung bevorzugt und vorteilhaft vorgesehen, dass der Wegfall der elektrischen Energieversorgung des elektromechanischen Fehlfunktionssystems durch eine Entleerung der Akkumulatoren als eine mögliche Fehlfunktion oder durch das Ansprechen eines Fehlerdetektors bei anderen Fehlfunktionen oder durch manuelles Eingreifen hervorgerufen ist. Gerade der Ausfall der gesamten Energieversorgung bei einer Speisung aus Akkumulatoren ist eine häufiger auftretende Fehlfunktion bei einem geschleppten Flugkörper, insbesondere bei sehr langen Messflügen (Flugzeit > 5 h). Tritt diese Fehlfunktion bei ausgelenkten Rudern auf, ist ein Einholen des Flugkörpers in das Fluggerät extrem erschwert bzw. unmöglich. Bei dem erfindungsgemäßen Flugkörper ist daher sichergestellt, dass bei einem Stromausfall alle Ruder in ihre neutrale Ausgangslage zurückkehren. Dazu wird ein Fehlfunktionsmodul auf elektromechanischer Basis eingesetzt, das bei einem Stromausfall sicher auf rein mechanische Weise arbeitet und für die Rückstellung der Ruder in ihre nicht ausgelenkte Ausgangslage sorgt. Aber auch andere auftretende Fehlfunktionen können zum Auslösen des Fehlfunktionssystems führen, wenn sie von einem Fehlerdetektor erkannt und in einen Wegfall der elektrischen Energieversorgung des Fehlfunktionssystems umgesetzt werden. Hierbei kann es sich beispielsweise um den Ausfall von Mess- oder Navigationsgeräten oder um eine Beschädigung des Flugkörpers oder der Ruder oder anderer navigationsrelevanter Komponenten handeln. Schließlich kann das Fehlfunktionssystem noch vom Piloten des Fluggeräts manuell ausgelöst werden, wenn dieser den Flugkörper zum Fluggerät einholen möchte.

Das Fehlfunktionssystem zur Rückstellung von Ruderauslenkungen tritt bei dem Flugkörper beim Wegfall seiner elektrischen Stromversorgung aufgrund einer auftretenden Fehlfunktion in Kraft. Es muss also gewährleistet sein, dass das Fehlfunktionssystem ohne Stromversorgung arbeitet. Dazu ist das Fehlfunktionssystem erfindungsgemäß elektromechanisch ausgebildet. Solange ein elektrischer Strom fließt, ist das Fehlfunktionssystem in Wartestellung, und alle Ruder können vom automatischen Flugkontrollsystem (Autopilot) ausgelenkt werden. Ein Stromwegfall aktiviert das Fehlfunktionssystem und löst es aus. Dazu ist gemäß einer weiteren Fortbildung der Erfindung der Flugkörper vorteilhaft und bevorzugt dadurch gekennzeichnet, dass das Fehlfunktionssystem eine elektromagnetische Spule aufweist, die im stromdurchflossenen Zustand einen federbelasteten Klinkenhebel festhält und diesen im stromlosen Zustand freigibt, wodurch ein federbelasteter Winkelhebel von einer ersten Stellung (A) in eine zweite Stellung (B) übergeht und über eine in einer Kulissenführung geführten ersten Steuerachse, die durch den Winkelhebel ebenfalls in eine zweite Stellung (B) überführt wird, einen Hebelarm und eine zweite Steuerachse die Quer-, Höhen- und Seitenruder in die unausgelenkte Ausgangslage bewegt und dort verriegelt. Dabei ist es bevorzugt und vorteilhaft, wenn das Fehlfunktionssystem bei einer Aktivierung automatisch eine deutlich sichtbare Signalflagge anzeigt. Die Erläuterung des Funktionsprinzips des Fehlfunktionssystems bei dem Flugkörper nach der Erfindung vereinfacht sich bedeutsam durch Zuhilfenahme von bildlichen Darstellungen. Es wird daher in diesem Zusammenhang auf den speziellen Beschreibungsteil mit den entsprechenden Ausführungsbeispielen verwiesen.

Das automatische Flugkontrollsystem als Teil der computergestützten Steuereinrichtung bei dem erfindungsgemäßen Flugkörper umfasst folgende Komponenten:
- drei Ruder für alle drei Raumachsen (Höhenruder, Seitenruder, Querruder), die durch elektrische Verstelleinrichtungen, beispielsweise schrittweise arbeitende Servomotoren, in ihrer Auslenkung verstellt werden können,
- eine CPU mit Software zur Umsetzung der verschiedenen Steueralgorithmen mit digitalen Filtern, Datenwandlern und Speichermedien,
- einen Höhenmesser, in dessen Abhängigkeit die Flughöhe des Flugkörpers automatisch stabil gehalten wird,
- ein automatisches Stabilisierungsmodul, das den Flug und insbesondere das Einholen des Flugkörpers gegenüber Pendel- und Schaukelbewegungen stabil hält und auch externe Kommandos annimmt, es wird ergänzt durch ein GPS-Modul mit einer inertialen Messeinheit mit Gyrometer und Beschleunigungssensor,
- ein automatisches Ausweichmodul zum Umfliegen von Hindernissen und
- ein Fehlfunktionsmodul, das ein elektromechanisches Fehlfunktionssystem umfasst, welches die Ruder bei einer Fehlfunktion in ihre unausgelenkte Ausgangslage zurückstellt.

Mit diesen Komponenten setzt das automatische Flugkontrollsystem bei dem Flugkörper nach der Erfindung fünf verschiedene Betriebsmodi um:
- Betriebsmodus "aus, normal": das Flugkontrollsystem ist stromlos, auch das Fehlfunktionssystem ist nicht aktiviert.
- Betriebsmodus "aktiv, normal": das Flugkontrollsystem arbeitet unter Stromzufuhr unter der Kontrolle des Piloten und der Automatik. Dieses kontrolliert und regelt die Fluglage des Flugkörpers automatisch. Der Flugkörper wird - im Rahmen der Grenzen durch das Fluggerät, das Tragseil und den Untergrund automatisch in allen drei Raumachsen manövriert.
- Betriebsmodus "aktiv, ausweichen": das Ausweichmodul ist aktiviert. Im Falle einer von den Sensoren erfassten bevorstehenden Kollision mit einem Hindernis jeglicher Art werden vom Ausweichmodul Steuerbefehle auf die drei Rudereinrichtungen des Flugkörpers ausgegeben, die zu einem optimalen Ausweichen in den möglichen drei Raumachsen führen, um die Kollision zu verhindern. Fliegt der Flugkörper unter einen vorgegebenen Höhenwert, beispielsweise 20 m, wird eine Warnung an den Systemoperator ausgegeben, der dann weiter entscheiden muss. Fällt der Flugkörper unter den Mindesthöhenwert von 10 m, wird sofort ein Steuerbefehl zum Aufsteigen des Flugkörpers ausgegeben.
- Betriebsmodus "aktiv, einholen": das Stabilisierungsmodul ist aktiviert. Das automatische Flugkontrollsystem arbeitet während des Einholens des Flugköpers zum Fluggerät mit einer höheren Frequenz, um Pendelbewegungen des Flugkörpers durch Gegensteuerung der Ruder schnell kompensieren zu können.
- Betriebsmodus "aktiv, Fehlfunktion": das Fehlfunktionssystem wird durch Wegfall seiner Stromversorgung ausgelöst. Alle Ruder werden mechanisch in ihre neutrale Ausgangsposition zurückgestellt und dort verriegelt, der Flugkörper kann gefahrlos eingeholt werden. Eine Rückkehr zu einem normalen Betriebsmodus ist nicht möglich, die Ruder müssen erst wieder manuell entriegelt werden.

Mit dem Flugkörper nach der Erfindung erfolgt eine automatische Steuerung der Flugposition, wodurch eine präzise Positionierung des Flugkörpers relativ zum Untergrund möglich ist. Er kann insbesondere in Flughöhen mit speziellen Windregimen, bei tiefen Wolken und bei komplexem Terrain eingesetzt werden, in denen ansonsten starke Auflagen bestehen ("restricted category") oder Operationen eines Flugkörpers bislang überhaupt nicht möglich sind. Die präzise Positionierung ist für die Messflüge von besonderer Bedeutung. Der Flugkörper stellt dabei ein komplexes Messsystem dar. Er umfasst Sensoren zur Ermittlung von Messdaten für wissenschaftliche Zwecke und von Messdaten für die eigene Navigation. Bevorzugt und vorteilhaft ist bei der Erfindung vorgesehen, dass die Sensoren zumindest ein vorwärtsschauendes Infrarotkamerasystem, ein Videokamerasystem, ein lasergestütztes Entfernungsmesssystem, ein radargestütztes Höhenmesssystem, ein satellitengestütztes Ortungssystem und/oder ein meteorologisches Messsystem umfassen. Diese Systeme sind grundsätzlich aus dem Stand der Technik bekannt und gewährleisten die zuverlässige Positionsbestimmung des Flugkörpers unter allen Witterungsbedingungen. Vorteilhaft und bevorzugt können zumindest die Sensoren für die Flugposition, beispielsweise die Infrarotkamera (FLIR - Forward Looking InfraRed), die Videokameras, aber auch die Sensoren für die Bestimmung des meteorologischen Zustands (AIMMS 20 Aircraft Integrated Meteorological Measurement System der Fa. Aventech, enthält auch ein GPS und weitere Komponenten) an den äußeren Enden der Tragflächen angeordnet sein. Dadurch können diese Sensoren optimal vorausschauen und arbeiten. Einen weiteren Sicherheitsaspekt stellt auch eine schwenkbare Videokamera im Fluggerät dar. Diese kann insbesondere den Flugkörper beobachten und auf einem für den Piloten im Fluggerät gut einsehbaren Display anzeigen. Durch Beobachtung können die Aktivierung des Fehlfunktionssystems (angezeigt durch ausgefahrene Signalflagge) sofort erkannt und nicht ausgesteuerte Bodenkontakte vermieden werden.

Für die Sensoren für die wissenschaftliche Datenerfassung kann bevorzugt und vorteilhaft bei dem Flugkörper nach der Erfindung im Bugbereich des Flugkörpers ein kompaktes Messmodul vorgesehen sein, das zumindest einen Teil der wissenschaftlichen Sensoren zur Messdatenermittlung enthält (zusätzlich auch zumindest teilweise die Sensoren zur Flugdatenermittlung) und leicht austauschbar ist. Dabei kann das Modul beispielsweise einfach über ein Gewinde angeschraubt werden. Durch die Anordnung an der Spitze des Flugkörpers können somit auch vorwärtsschauende Messsensoren vorgesehen werden. Das Messmodul kann kundenspezifisch ausgebildet sein ("payload") und entsprechend einfach gegen andere Messmodule - je nach Kundenwunsch auch für kommerzielle Anwendungen - ausgetauscht werden. Weitere Sensoren können auch direkt am oder im Flugkörper angeordnet sein. Hinter den Tragflächen kann der Flugkörper die Akkumulatoren, das automatische Flugkontrollsystem und das Fehlfunktionsmodul aufnehmen. Vor den Tragflächen kann weitere Elektronik vorgesehen sein. Diese kann insbesondere dem elektrischen und datentechnischen Anschluss des Messmoduls dienen. Die aufgenommenen Daten können bevorzugt und vorteilhaft über W-LAN (bidirektionale drahtlose Datenübertragungseinrichtung) an das Fluggerät übermittelt werden. Die drahtlose Datenübertragung kann beispielsweise an eine Speichervorrichtung im Flugkörper, an das Fluggerät, an eine Satellitenstation oder auch an eine bodengestützte Empfangsstation auf dem Land oder dem Wasser erfolgen. Die Datenübertragung erfolgt in beiden Richtungen (bidirektional).

Die besondere Manövrierbarkeit des Flugkörpers nach der Erfindung ergibt sich durch das Vorsehen von Höhen-, Quer- und Seitenruder im Zusammenhang mit weiteren Komponenten und einer automatischen Ansteuerung. Die Ruder in den Tragflächen sind als Querruder, die Ruder in den Windleitflächen sind als Höhen und Seitenruder ausgebildet. Dabei können die Windleitflächen verschiedene Ausrichtungen zueinander aufweisen. Aus dem Stand der Technik sind beispielsweise schräge, kreuzförmige oder kastenförmige Anordnungen von Rudern bekannt. Solche Anordnungen der Ruder unter beliebigen Winkeln zueinander können in der automatischen Ansteuerung berücksichtigt und ausgeglichen werden. Jedes Ruder trägt dann zur Ansteuerung in einer Raumrichtung bei. Einfacher in der Ansteuerung ist aber die klassische orthogonale Ausrichtung der einzelnen Ruder zueinander, bei der jedem Ruder eine Raumrichtung zugeordnet ist. Deshalb ist es vorteilhaft und bevorzugt, wenn die beiden ersten Windleitflächen (mit dem Höhenruder) parallel und die beiden zweiten Windleitflächen (mit dem Seitenruder) orthogonal zu den Tragflächen (mit dem Querruder) angeordnet sind. Starre Windleitflächen ohne Rudereinrichtungen können bei dem Flugkörper nach der Erfindung natürlich auch vorgesehen sein und dienen der Stabilisierung des Flugkörpers.

Die stabile Lage des Flugkörpers ist ausschlaggebend für die Güte der Messungen und für die Sicherheit sowohl des Flugkörpers als auch des schleppenden Fluggeräts (Schleppverband). Neben der elektronischen Austarierung des Flugkörpers durch das Stabilisierungsmodul kann auch eine einfache konstruktive Maßnahme zur besonderen Stabilisierung des Flugkörpers beitragen. Bevorzugt und vorteilhaft ist bei dem Flugkörper nach der Erfindung daher vorgesehen, dass an den beiden ersten Windleitflächen feststehende angewinkelte Heckflossen angeordnet sind, die zwischen 4° und 6°, insbesondere um 5° zur Längsachse des Flugkörpers in Richtung auf seinen Bugbereich hin geneigt sind. Hierbei handelt es sich um eine bekannte, sehr effektive Maßnahme bei Helikoptern. Desweiteren können bevorzugt und vorteilhaft direkt am Flugkörper und/oder an den Heckflossen Landeklappen, die auch von dem automatischen Flugkontrollsystem angesteuert sind, angeordnet sein. Diese miniaturisierten Landeklappen (auch Bremsklappen, "air brakes") erhöhen in ausgefahrenem Zustand den Luftwiderstand des Flugkörpers und tragen so zu seiner Stabilisierung und damit zur weiteren Sicherheit des Gesamtsystems bei. Dies ist insbesondere beim Einholvorgang des Flugkörpers von Vorteil. Ein feststehender, kegelstumpfförmiger Heckanbau im Heckbereich des Flugkörpers sorgt ebenfalls für eine weitere Stabilisierung durch eine günstige aerodynamische Form des Flugkörpers. Dabei kann bevorzugt und vorteilhaft vorgesehen sein, dass im Heckbereich des Flugkörpers ein strömungsgetriebener Generator (Turbine) zum Nachladen der Akkumulatoren angeordnet ist. Hierbei handelt es sich um eine Maßnahme, die die mögliche Fehlfunktion "Stromausfall durch leere Akkumulatoren" weitgehend verhindert. Um Messungen nicht zu stören, kann vorgesehen sein, dass der Generator nur in Betrieb ist, wenn nicht gemessen wird. In der Mitte des Generators kann der kegelstumpfförmige Heckanbau angeordnet sein. Weitere konstruktive Details zum Flugkörper nach der Erfindung sind den nachfolgend beschriebenen Ausführungsbeispielen zu entnehmen.

### Ausführungsbeispiele

Der Flugkörper nach der Erfindung und seine vorteilhaften Modifikationen werden anhand der schematischen, nicht maßstäblichen Figuren zum besseren Verständnis noch weitergehend erläutert. Im Einzelnen zeigt die
- Figur 1: eine schematische Gesamtansicht des Flugkörpers,
- Figur 2: eine schematische Gesamtansicht des Fehlfunktionssystems,
- Figur 3A: eine erste Detailansicht des Fehlfunktionssystems im Normalbetrieb (keine Ruderverstellung),
- Figur 3B: eine zweite Detailansicht des Fehlfunktionssystems im Normalbetrieb (Ruderverstellung "up"),
- Figur 3C: eine dritte Detailansicht des Fehlfunktionssystems im Normalbetrieb (Ruderverstellung "down"),
- Figur 3D: eine erste Detailansicht des Fehlfunktionssystems bei einer Fehlfunktion (keine Ruderverstellung),
- Figur 3E: eine zweite Detailansicht des Fehlfunktionssystems bei einer Fehlfunktion (mit Ruderverstellung) und
- Figur 4: mögliche Anbauorte für miniaturisierte Landeklappen.

Eine genaue Darstellung des bekannten CTV - Flugkörpers als nächstliegendem Stand der Technik für den Flugkörper nach der Erfindung ist unter der o.a. URL zu erhalten, insbesondere sind Fotos einer Gesamtansicht, einer Seitenansicht und des inneren Instrumentenlayouts dargestellt. Zu erkennen sind die konstruktiven Merkmale gemäß Oberbegriff Anspruch 1.

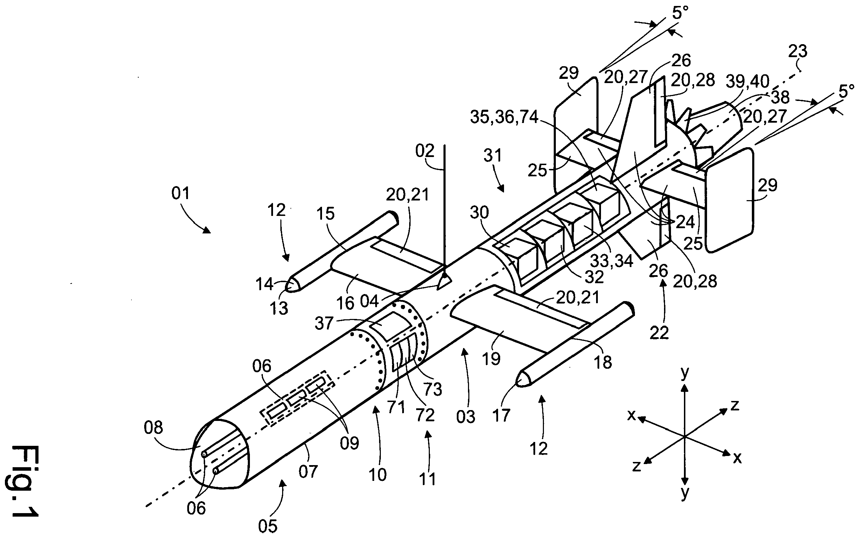

Zur Erfindung ist in der Figur 1 ein Flugkörper 01 zur Ermittlung von Messdaten dargestellt. Es handelt sich um einen aktiven Flugkörper 01. Dabei bezieht sich die Bezeichnung "aktiv" weder auf einen eigenen Antrieb noch auf die Art der Messwerterfassung. Vielmehr ist die eigenständige Manövrierbarkeit beim Schleppen durch ein Fluggerät gemeint. Mit dem Fluggerät ist der Flugkörper 01 durch ein Tragseil 02 (optimale Länge in einem Bereich von 600 bis 700 m) verbunden, das in einem Mittenbereich 03 des Flugkörpers 01 in eine Öse 04 eingeklinkt ist. Durch die mittige Einklinkung bleibt der Bugbereich 05 des Flugkörpers frei und damit manövrierfähig, während der Flugkörper 01 am Tragseil 02 vom Fluggerät durch die Luft geschleppt wird. Der Flugkörper 01 kann beispielsweise 3, 5 m lang sein und bei einem Durchmesser von 0,35 m ein Gewicht von 150 kg aufweisen.

Der Flugkörper 01 weist Sensoren 06 zur Ermittlung von Messdaten auf. Im gezeigten Ausführungsbeispiel befinden sich diese hauptsächlich in einem kompakten Messmodul 07, das im Bugbereich 05 des Flugkörpers 01 angeordnet ist. Das Messmodul 07 ist kundenspezifisch bestückt ("payload"). Es weist eine Glaskuppel 08 auf, hinter der vorwärtsschauende Sensoren 06 angeordnet sind. Weitere Sensoren 06 befinden sich hinter Öffnungen 09 im Messmodul 07. Im hinteren Bereich verfügt das Messmodul 07 über einen Befestigungsbereich 10, der der konstruktiven und elektrischen Verbindung mit dem Flugkörper 01 dient. Hinter dem Messmodul 07 befindet sich ein Elektronikabschnitt 11, in dem die Elektronik zur Stromversorgung und Messdatenleitung des Messmoduls 07 angeordnet ist. Weiterhin können sich im Elektronikbereich 11 (aber auch an anderen Stellen am Flugkörper 01) ein lasergestütztes Entfernungsmesssystem 71, ein radargestütztes Höhenmesssystem 72 und ein satellitengestütztes Ortungssystem 73 befinden.

Der Flugkörper 01 weist weiterhin Sensoren 12 zur Ermittlung der Flugposition des Flugkörpers 01 auf. Hierbei handelt es sich im gezeigten Ausführungsbeispiel um eine vorwärtsschauende Infrarotkamera 13 und eine Videokamera 14, die am Außenende 15 einer Tragfläche 16 angeordnet sind, und ein meteorologisches Messsystem 17, die am Außenende 18 der anderen Tragfläche 19 angeordnet ist.

Der Flugkörper 01 weist im Mittenbereich 03 zwei Tragflächen 16, 19 auf, die zur Veränderung der vertikalen Flugposition des Flugkörpers 01 verstellbar ausgebildet und mit elektrischen Verstelleinrichtungen 20 verbunden sind. Diese sind als Querruder 21 ausgebildet. Weiterhin weist der Flugkörper 01 in seinem Heckbereich 22 mehrere radial um seine Längsachse 23 angeordnete Windleitflächen 24 auf. Dabei sind im gewählten Ausführungsbeispiel zwei erste Windleitflächen 25 parallel und zwei weitere Windleitflächen 26 orthogonal zu den Tragflächen 16, 19 angeordnet. Die genaue Position der Windleitflächen 25, 26 ist aber nicht zwingend festgelegt und kann auch andere Winkel als den rechten Winkel umfassen. Alle ersten und zweiten Windleitflächen 25, 26 weisen ebenfalls elektrische Verstelleinrichtungen 20 auf. Dabei sind die elektrischen Verstelleinrichtungen 20 der beiden ersten Windleitflächen 25 als Höhenruder 27 und die elektrischen Verstelleinrichtungen 20 der beiden zweiten Windleitflächen 26 als Seitenruder 28 ausgebildet. Weiterhin weisen die ersten Windleitflächen 25 feststehende Heckflossen 29 auf, die um 5° angewinkelt zur Längsachse 23 des Flugkörpers 01 in Richtung auf seinen Bugbereich 05 hin geneigt sind und der aerodynamischen Stabilisierung des Flugkörpers 01 dienen.

Hinter seinem Mittenbereich 03 sind in dem Flugkörper 03 Akkumulatoren 30 zu elektrischen Energieversorgung und eine computergestützte Steuereinrichtung 31 angeordnet (aufgeschnitten dargestellt, diese Komponenten befinden sich natürlich im Inneren des Flugkörpers 01). Diese weist ein automatisches Flugkontrollsystem 32 auf, das der selbsttätigen Steuerung der Flugposition des Flugkörpers 01 in allen drei Raumrichtungen x, y, z dient. Dabei umfasst das automatische Flugkontrollsystem 32 ein Stabilisierungsmodul 33 mit dem das Querruder 21, das Höhenruder 27 und das Seitenruder 28 automatisch so verstellt werden, dass der geschleppte Flugkörper 01 seine Stabilität im Flug und beim Einholen beibehält. Weiterhin umfasst das automatische Flugkontrollsystem 32 ein Ausweichmodul 34, mit dem das Querruder 21, das Höhenruder 27 und das Seitenruder 28 automatisch so verstellt werden, dass der geschleppte Flugkörper 01 von den Sensoren 12 ermittelten Hindernissen automatisch durch optimale Änderungen seiner Flugposition in allen drei Raumrichtungen ausweicht. Weiterhin weist das automatische Flugkontrollsystem 32 ein bei einer aufgetretenen Fehlfunktion aktiviertes Fehlfunktionsmodul 35 mit einem zugehörigen Fehlfunktionssystem 36 auf, mit dem das Querruder 21, das Höhenruder 27 und das Seitenruder 28 in ihre unausgelenkte Ausgangslage gestellt und dort verriegelt werden. Weitere Details zu dem Fehlfunktionssystem 36 sind den nachfolgenden Figuren zu entnehmen.

In der Figur 1 ist weiterhin eine drahtlose Datenübertragungseinrichtung 37 im Elektronikabschnitt 11 angeordnet. Über diese können ermittelte Daten (sowohl Messdaten als auch Flugpositionsdaten) zu beliebigen Empfängern übermittelt werden. Schließlich ist im Heckbereich 22 ein feststehender, kegelstumpfförmiger Heckanbau 38 vorgesehen, der ebenfalls der Stabilisierung des Flugkörpers 01 dient. Der Heckanbau 38 sitzt auf einem Generator 39. Der Generator 39 ist als Turbine 40 ausgebildet, die von der Luftströmung während des Fluges angetrieben wird und dadurch Strom erzeugt. Dieser dient der Nachladung der Akkumulatoren 30 des Flugkörpers 01 während des Fluges, um eine mögliche Fehlfunktion "Stromausfall durch geleerte Akkumulatoren" vermeiden zu können. Weiterhin kann die Fehlfunktion "Stromausfall" beispielsweise auch durch eine Leitungs- oder Kontaktunterbrechung hervorgerufen werden. Die Fehlfunktion "Stromausfall" führt direkt zu einer Aktivierung des elektromechanischen Fehlfunktionssystems 36. Andere auftretende Fehlfunktionen werden von einem Fehlerdetektor 74 als Bestandteil des Fehlfunktionsmoduls 35 erkannt und in einen Wegfall der Stromversorgung des Fehlfunktionssystems 36 überführt, was zu dessen Aktivierung führt. Eine manuell ausgelöste Aktivierung ist ebenfalls möglich.

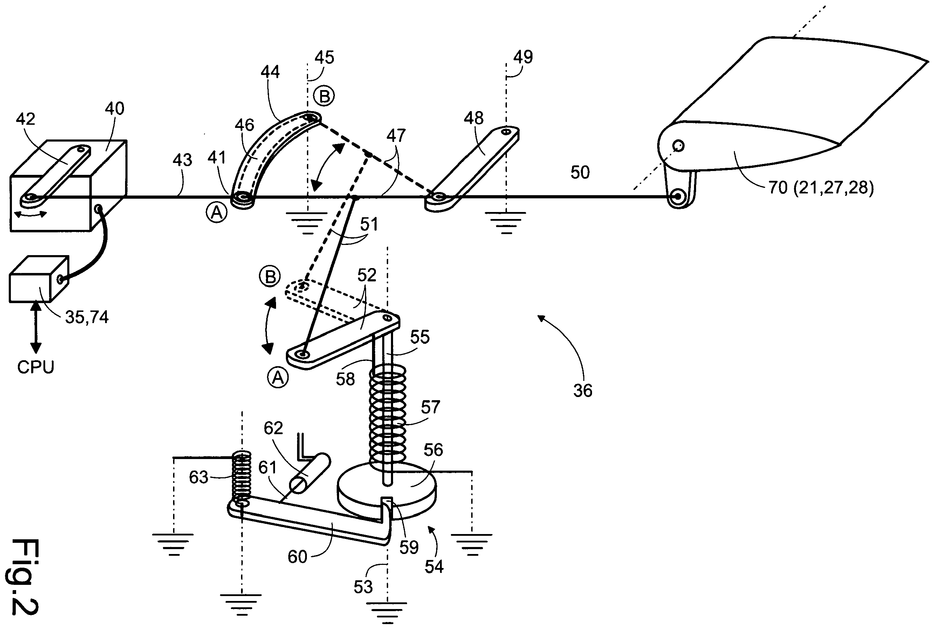

In der Figur 2 ist das elektromechanische Fehlfunktionssystem 36 in seinen wesentlichen Komponenten schematisch dargestellt. Dabei ist nur ein Ruder, hier ein Querruder 21, dargestellt. Das Fehlfunktionssystem 36 greift aber selbstverständlich auf alle Querruder 21, Seitenruder 28 und Höhenruder 27 zu, um diese in Falle einer Fehlfunktion in ihre unausgelenkte Ausgangsposition zurückstellen und dort verriegeln zu können, damit der Flugkörper 01 gefahrlos zum Fluggerät zurückgeholt werden kann. Die nachstehenden Ausführungen sind somit auf jedes Ruder 21, 27, 28 zu übertragen. Vereinfachend werden alle Ruder mit dem Bezugszeichen 70 bezeichnet.

Dem Ruder 70 ist ein Servomotor 40 zugeordnet, der von dem Fehlfunktionsmodul 35 angesteuert wird. Der Servomotor 40 betätigt über einen Servohebel 42 eine Servobetätigungsstange 43. Die Servobetätigungsstange 43 ist mit dem einen Ende 41 eines Kulissenhebels 44 fest verbunden und dreht diesen im Rahmen ihres Hubes um eine ortsfeste (Symbol "Erdungszeichen") erste Führungsachse 45, die mit dem anderen Ende des Kulissenhebels 44 fest verbunden ist. In der Kulissenführung 46 des Kulissenhebels 44 wird eine erste Steuerachse 47 an ihrem einen Ende geführt. An ihrem anderen Ende ist die erste Steuerachse 47 mit dem einen Ende eines Hebelarms 48 verbunden. Dieser ist mit seinem anderen Ende drehbar an einer ortfesten zweiten Führungsachse 49 gelagert. An dem einen Ende des Hebelarms 48 greift auch eine zweite Steuerachse 50 an, die wiederum mit dem Ruder 70 verbunden ist und dieses in seine unausgelenkte Ausgangslage ziehen kann.

Die erste Steuerachse 47 ist über eine Betätigungsachse 51 mit dem einen Ende eines federbelasteten Winkelhebels 52 verbunden. Dieser ist mit seinem anderen Ende drehbar auf einer ortsfesten dritten Führungsachse 53 gelagert. Weiterhin ist der Winkelhebel 52 an seinem anderen Ende mit einer Verklinkung 54 fest verbunden, die aus einem Rohr 55, das auf der dritten Führungsachse 53 läuft, und einer Verklinkungsscheibe 56 besteht. Oberhalb der Verklinkung 54 ist eine erste Spiralfeder 57 (Wirkung Torsion) auf dem Rohr 55 angeordnet, die einerseits ortsfest fixiert ist und andererseits mit einem Ende 58 auf den Winkelhebel 52 drückt. Die Verklinkungsscheibe 56 weist eine Aussparung 59 auf, in die ein Klinkenhebel 60 eingreift. Dieser ist über einen Stößel 61 einer elektromagnetischen Spule 62 fixiert. Weiterhin greift eine ortsfeste zweite Spiralfeder 63 an dem Klinkenhebel 60 an und übt eine Druckkraft auf ihn aus. Im normalen Betrieb sind die beiden Spiralfedern 57, 63 gespannt und die Klinkenhebel 60 ist in der Aussparung 59 durch den Stößel 61 der stromdurchflossenen elektromagnetische Spule 62 in seiner Lage fixiert. Die mit dem Winkelhebel 52 verbundene erste Steuerachse 47 befindet sich ein einer ersten Stellung A ("Steuerposition")

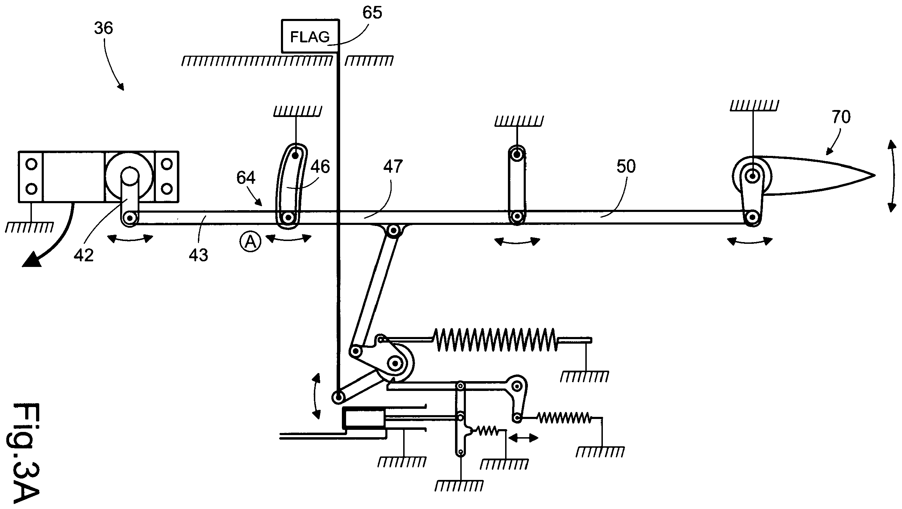

In der Figur 3A ist das Funktionsschema des Fehlfunktionssystems 36 im normalen Flugbetrieb dargestellt: es ist betriebsbereit (die Federn sind gespannt), aber nicht ausgelöst. Das Fehlfunktionssystem 36 befindet sich in dem Zustand, der oben beschrieben wurde. Die erste Steuerachse 47 greift in einer unteren Endlage 64 (erste Stellung A, Steuerposition) in die Kulissenführung 46 ein und bildet eine Linie mit der zweiten Steuerachse 50. Bewegungen des Servohebels 42 werden über die Servobetätigungsstange 43 und die beiden Steuerachsen 47, 50 direkt auf das Ruder 70 übertragen. Der Servohebel 42 ist aber nicht ausgelenkt, entsprechend befindet sich das Ruder 70 in seiner unausgelenkten Ausgangsstellung. Zu erkennen ist in der Figur 3A noch eine Signalflagge 65, die für den Piloten sichtbar - anzeigt, ob das Fehlfunktionssystem 36 aktiviert ist oder nicht. Im inaktivierten Zustand ist die Signalflagge 65 eingefahren.

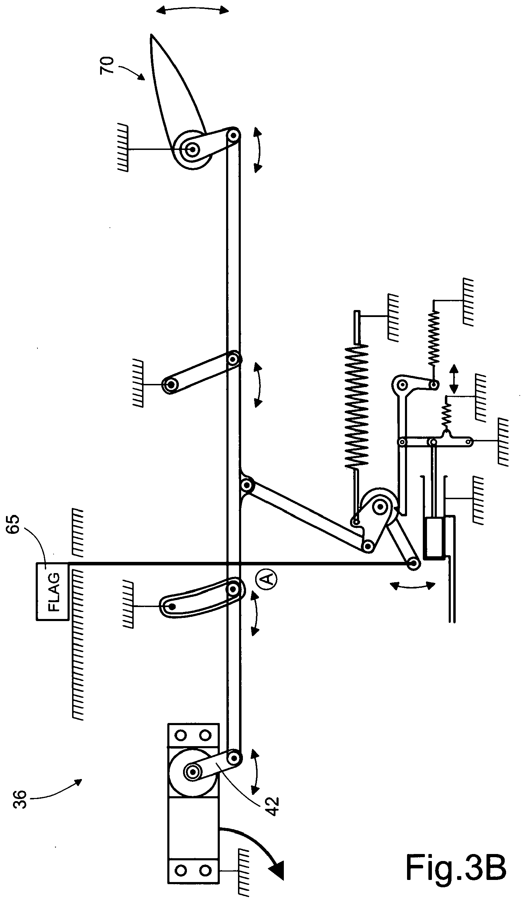

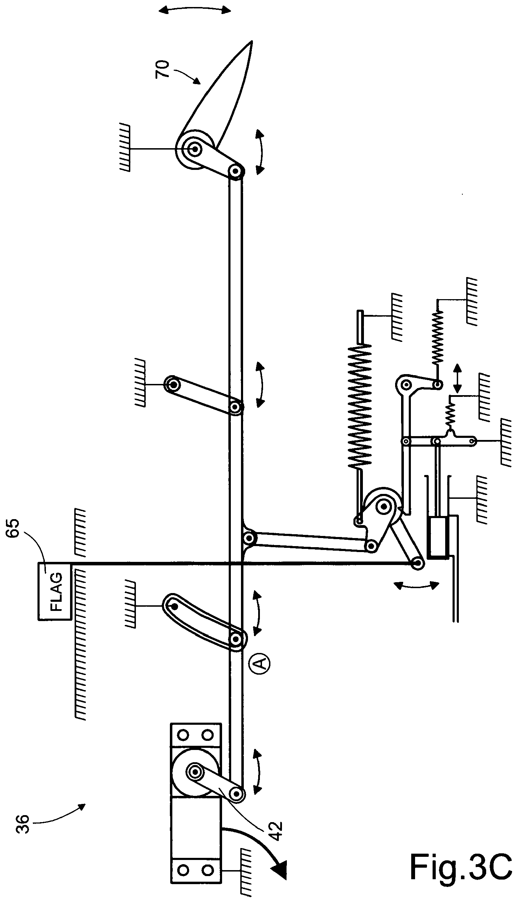

In der Figur 3B ist der Servohebel 42 nach rechts ausgelenkt, das Ruder 70 ist nach oben ausgelenkt. In der Figur 3C ist der Servohebel 42 nach links ausgelenkt, das Ruder 70 ist nach unten ausgelenkt. Es herrscht normaler Flugbetrieb mit vollständiger Manövrierbarkeit im dreidimensionalen Raum.

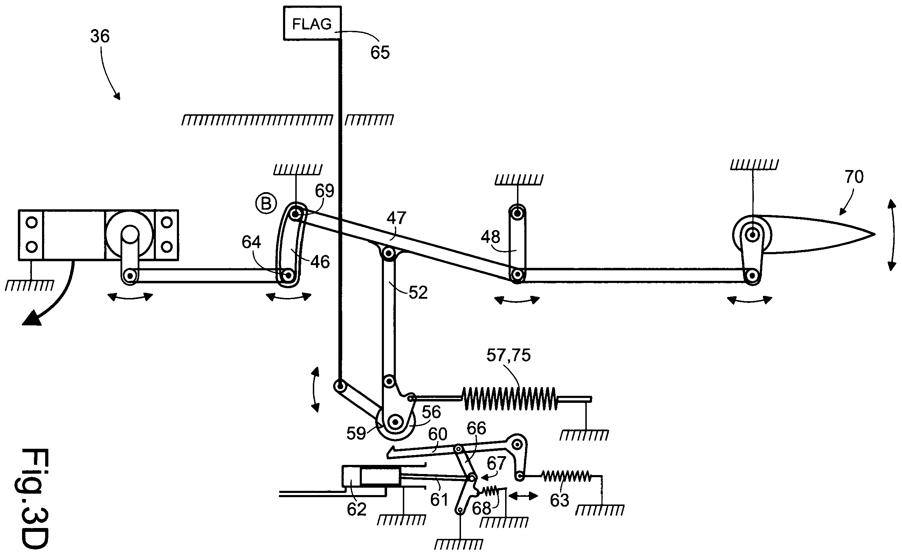

Die Figur 3D zeigt den Zustand bei einer aufgetretenen Fehlfunktion. Das Fehlfunktionssystem 36 ist aktiviert. Zu erkennen ist, dass der Stößel 61 der nunmehr stromlosen elektromagnetischen Spule 62 ausgefahren ist. Dadurch wurde der Klinkenhebel 60 über die zweite Spiralfeder 63 aus der Aussparung 59 der Verklinkungsscheibe 56 gezogen. Im gezeigten Ausführungsbeispiel ist der Klinkenhebel 60 mit einem Gelenkhebel 66 verbunden. In dessen Gelenk 67 greift eine dritte Spiralfeder 68 an, die den Gelenkhebel 66 auslenkt, sodass der Klinkenhebel 60 nach unten gezogen wird, wenn der Stößel 61 keine Haltekraft mehr ausübt. Durch das Lösen der Verklinkungsscheibe 56 wird der Winkelhebel 52 von einer Zugfeder 75 hochgedrückt. Die Zugfeder 75 entspricht dabei der ersten Spiralfeder 57 (Torsion) gemäß Figur 1, jedoch in einer anderen Einbaulage, sodass sie eine andere Wirkung ausübt. Das Rohr 55 ist hierbei entfallen. Die erste Steuerachse 47 wird von der unteren Endlage 64 in der Kulissenführung 46 (erste Stellung A, Steuerposition) in die obere Endlage 69 (zweite Stellung B, Verriegelungsposition) verschoben. Der Hebelarm 48 ist in seiner Ausgangsstellung blockiert, ebenso das Ruder 70. Gleichzeitig wird die Signalflagge 65 herausgeschoben, sodass der Pilot des Fluggeräts erkennen kann, dass im Flugkörper 01 der Strom ausgefallen ist, dieser nicht mehr manövrierfähig ist und eingeholt werden muss.

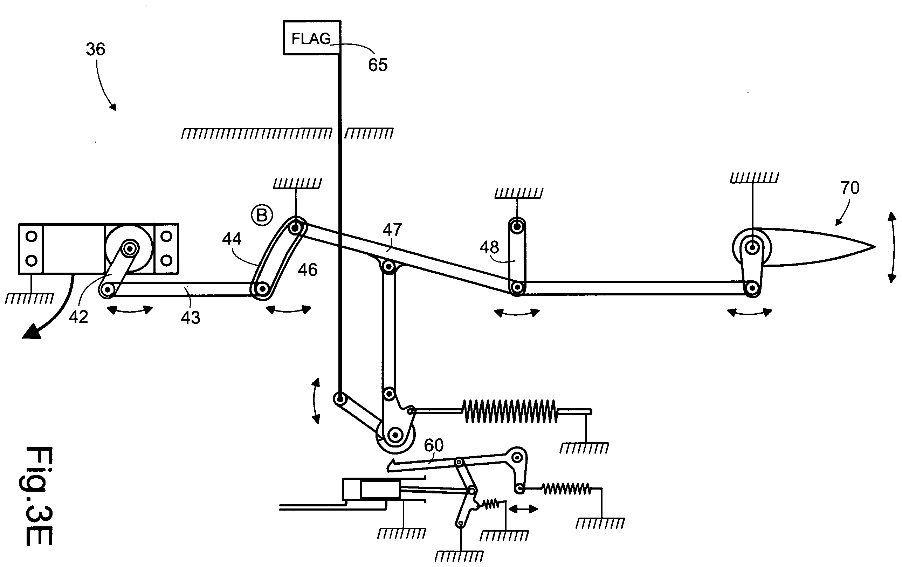

In der Figur 3E ist zu erkennen, dass in der Stellung B, Verriegelungsposition, Bewegungen des Servohebels 42 und der Servobetätigungsstange 43 ohne Lageveränderung der ersten Steuerachse 47 und des Hebelarms 48 bleiben und nur zu einer Drehung des Kulissenhebels 44 führen. Das Ruder 70 bleibt in seiner neutralen Ausgangslage blockiert. Die Blockierung kann nur durch manuelle Rückstellung der ersten Steuerachse 47 in der Kulissenführung 46 im Kulissenhebel 44 ausgehoben werden. Ebenso ist der Klinkenhebel 60 manuell wieder einzuklinken. Dies kann nur während einer Wartung des Flugkörpers 01 auf dem Boden erfolgen. Im Gegenzug dazu gewährleistet das Fehlfunktionssystem 36 aber immer absolute Zuverlässigkeit für den Fall einer Fehlfunktion, sodass der Flugkörper 01 insbesondere keine gefährlichen Flugpositionen einnehmen kann oder eingesetzt wird, ohne Messdaten zu generieren. Der Flugkörper 01 ist somit besonders vorteilhaft für Messungen aller Art in Bodennähe einzusetzen, in der ansonsten höchste Sicherheitsauflagen bestehen.

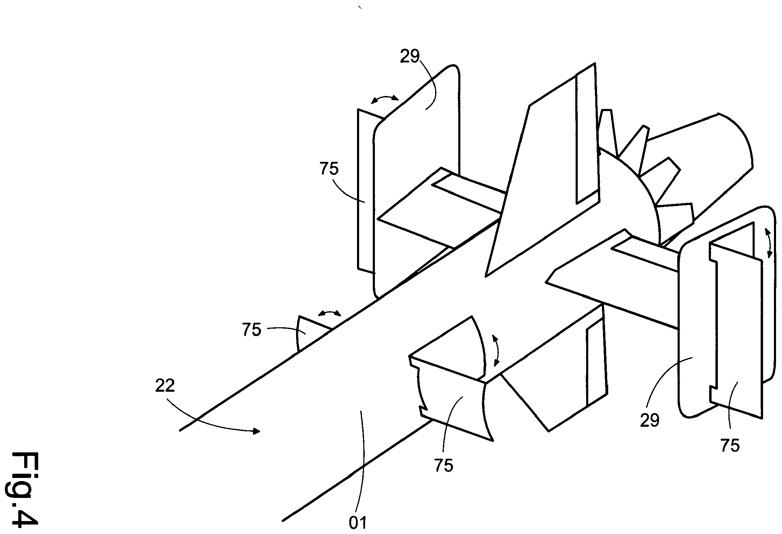

In der Figur 4 schließlich sind mögliche Anbauorte für miniaturisierte Landeklappen 76, die der Stabilisierung des Flugkörpers 01 dienen, dargestellt. Sie können direkt am Flugkörper 01 in seinem Heckbereich 22 oder an den Heckflossen 29 angeordnet sein, sofern diese am Flugkörper 01 vorgesehen sind. Eine Anordnung an beiden Orten oder noch an anderen Orten ist ebenfalls möglich. Die Landeklappen 76 werden ebenfalls von dem automatischen Flugkontrollsystem 32 (in der Figur 4 nicht weiter dargestellt) angesteuert und insbesondere beim Einholvorgang des Flugkörpers 01 zum Fluggerät ausgeklappt. Im Flugbetrieb sind die Landeklappen 76 angeklappt (Doppelpfeil).

### Bezugszeichenliste

- 01: Flugkörper
- 02: Tragseil
- 03: Mittenbereich von 01
- 04: Öse
- 05: Bugbereich von 01
- 06: Sensor (für Messung)
- 07: Messmodul
- 08: Glaskuppel
- 09: Öffnung
- 10: Befestigungsbereich
- 11: Elektronikabschnitt
- 12: Sensor (für Flugposition)
- 13: Infrarotkamerasystem
- 14: Videokamerasystem
- 15: Außenende von 16
- 16: eine Tragfläche
- 17: meteorologisches Messsystem
- 18: Außenende von 19
- 19: andere Tragfläche
- 20: elektrische Verstelleinrichtung
- 21: Querruder
- 22: Heckbereich von 01
- 23: Längsachse von 01
- 24: Windleitfläche
- 25: erste Windleitfläche
- 26: zweite Windleitfläche
- 27: Höhenruder
- 28: Seitenruder
- 29: Heckflosse
- 30: Akkumulator
- 31: computergestützte Steuereinrichtung
- 32: automatisches Flugkontrollsystem
- 33: Stabilisierungsmodul
- 34: Ausweichmodul
- 35: Fehlfunktionsmodul
- 36: elektromechanisches Fehlfunktionssystem
- 37: drahtlose Datenübertragungseinrichtung
- 38: Heckanbau
- 39: Generator
- 40: Turbine
- 70: Ruder (21, 27, 28)
- 40: Servomotor
- 41: eines Ende von 43
- 42: Servohebel
- 43: Servobetätigungsstange
- 44: Kulissenhebel
- 45: erste Führungsachse
- 46: Kulissenführung
- 47: erste Steuerachse
- 48: Hebelarm
- 49: zweite Führungsachse
- 50: zweite Steuerachse
- 51: Betätigungsachse
- 52: Winkelhebel
- 53: dritte Führungsachse
- 54: Verklinkung
- 55: Rohr
- 56: Verklinkungsscheibe
- 57: erste Spiralfeder
- 58: eines Ende von 57
- 59: Aussparung in 56
- 60: Klinkenhebel
- 61: Stößel
- 62: elektromagnetische Spule
- 63: zweite Spiralfeder
- 64: untere Endlage in 46
- 65: Signalflagge
- 66: Gelenkhebel
- 67: Gelenk
- 68: dritte Spiralfeder
- 69: obere Endlage in 46
- 70: Ruder (21, 27, 28)
- 71: lasergestütztes Entfernungsmesssystem
- 72: radargestütztes Höhenmesssystem
- 73: satellitengestütztes Ortungssystem
- 74: Fehlerdetektor
- 75: Zugfeder
- 76: Landeklappe

- A: erste Stellung von 47 (Steuerposition)
- B: zweite Stellung von 47 (Verriegelungsposition)

## Patentansprüche

1. Zylinderförmiger aktiver Flugkörper (01) zur Ermittlung von Messdaten, der mittels eines Tragseils (02), das im Mittenbereich (03) des Flugkörpers (01) einklinkbar ist, von einem angetriebenen Fluggerät durch die Luft schleppbar ist, zumindest mit
• Sensoren (06, 12) zur Ermittlung der Messdaten und der Flugposition des Flugkörpers (01),
• zwei im Mittenbereich (03) des Flugkörpers (01) angeordneten Tragflächen (16, 19),
• mehreren im Heckbereich (22) des Flugkörpers (01) radial um seine Längsachse (23) angeordneten Windleitflächen (24) und mit
• elektrischen Verstelleinrichtungen (20) für gegenüberliegende erste Windleitflächen (25) und zweite Windleitflächen (26), wobei die Verstelleinrichtung (20) der beiden ersten Windleitflächen (25) als Höhenruder (27) und die Verstelleinrichtung (20) der beiden zweiten Windleitflächen (26) als Seitenruder (28) ausgebildet ist,
**dadurch gekennzeichnet, dass**
• die zwei im Mittenbereich (03) des Flugkörpers (01) angeordneten Tragflächen (16, 19) zur Veränderung der vertikalen Flugposition des Flugkörpers (01) verstellbar ausgebildet und mit elektrischen Verstelleinrichtungen (20) verbunden sind, die als Querruder (21) ausgebildet sind,
• eine computergestützte Steuereinrichtung (31) vorgesehen ist, die ein automatisches Flugkontrollsystem (32) zumindest zur selbsttätigen Steuerung der vertikalen Flugposition des Flugkörpers (01) aufweist, das ein bei einer Fehlfunktion aktiviertes Fehlfunktionsmodul (35) umfasst, mit dem zumindest die elektrischen Verstelleinrichtungen (20) für die Tragflächen (16, 19) in eine unausgelenkte Ausgangslage gestellt werden
• die elektrischen Verstelleinrichtungen (20) für die gegenüberliegenden ersten Windleitflächen (25) und zweiten Windleitflächen (26) auch von dem automatischen Flugkontrollsystem (32) angesteuert sind,
• das automatische Flugkontrollsystem (32) ein Ausweichmodul (34) umfasst, das dazu ausgebildet ist, die Quer-, Höhen- und Seitenruder (21, 27, 28) automatisch so zu verstellen, dass der geschleppte Flugkörper (01) Hindernissen, die von den Sensoren (12) mit einer vorgegebenen Messfrequenz ermittelt werden, durch optimale Änderungen seiner Flugposition ausweicht,
• das automatische Flugkontrollsystem (32) ein Stabilisierungsmodul (33) zur Flugstabilisierung des Flugkörpers (01) umfasst, das dazu ausgebildet ist, die Quer-, Höhen- und Seitenruder (21, 27, 28) automatisch so zu verstellen, dass die Flugposition des geschleppten Flugkörpers (01) stabilisiert ist, wobei beim Einholen des Flugkörpers (01) unter das Fluggerät in Abhängigkeit vom Abstand des Flugkörpers (01) zum Fluggerät die Messfrequenz der Sensoren (12) erhöht ist,
• das Fehlfunktionsmodul (35) ein elektromechanisches Fehlfunktionssystem (36) umfasst, das bei einem Wegfall seiner elektrischer Energieversorgung automatisch aktiviert ist und mit dem die Quer-, Höhen- und Seitenruder (21, 27, 28) in ihre unausgelenkte Ausgangslage bewegt und dort verriegelt werden, und dass
• Akkumulatoren (30) zur elektrischen Energieversorgung vorgesehen sind.

2. Flugkörper (01) nach Anspruch 1,
**dadurch gekennzeichnet, dass**
ab einem Abstand des Flugkörpers (01) von 5 m zum Fluggerät die Messfrequenz auf 5 Hz erhöht ist.

3. Flugkörper (01) nach Anspruch 1 oder 2,
**dadurch gekennzeichnet, dass**
der Wegfall der elektrischen Energieversorgung des elektromechanischen Fehlfunktionssystems (36) hervorgerufen ist durch eine Entleerung der Akkumulatoren (30) als eine mögliche Fehlfunktion oder durch das Ansprechen eines Fehlerdetektors (74) bei anderen Fehlfunktionen oder durch manuelles Eingreifen.

4. Flugkörper (01) nach einem der vorangehenden Ansprüche,
**dadurch gekennzeichnet, dass**
das Fehlfunktionssystem (36) eine elektromagnetische Spule (62) aufweist, die im stromdurchflossenen Zustand einen federbelasteten Klinkenhebel (60) festhält und diesen im stromlosen Zustand freigibt, wodurch ein federbelasteter Winkelhebel (52) von einer ersten Stellung (A) in eine zweite Stellung (B) übergeht und über eine in einer Kulissenführung (46) geführten ersten Steuerachse (47), die durch den Winkelhebel (52) ebenfalls in eine zweite Stellung (B) überführt ist, einen Hebelarm (48) und eine zweite Steuerachse (50) die Quer-, Höhen- und Seitenruder (21, 27, 28) in die unausgelenkte Ausgangslage bewegt und dort verriegelt.

5. Flugkörper (01) nach Anspruch 4,
**dadurch gekennzeichnet, dass**
das Fehlfunktionssystem (36) bei einer Aktivierung automatisch eine deutlich sichtbare Signalflagge (65) anzeigt.

6. Flugkörper (01) nach einem der vorangehenden Ansprüche,
**dadurch gekennzeichnet, dass**
die Sensoren (12) zur Ermittlung der Flugposition des Flugkörpers (01) zumindest ein vorwärtsschauendes Infrarotkamerasystem (13), ein Videokamerasystem (14), ein lasergestütztes Entfernungsmesssystem (71), ein radargestütztes Höhenmesssystem (72), ein satellitengestütztes Ortungssystem (73) und/oder ein meteorologisches Messsystem (17) umfassen.

7. Flugkörper (01) nach einem der vorangehenden Ansprüche,
**dadurch gekennzeichnet, dass**
im Bugbereich (05) des Flugkörpers (01) ein kompaktes Messmodul (07) vorgesehen ist, das zumindest einen Teil der Sensoren (06) zur Messdatenermittlung enthält und leicht austauschbar ist.

8. Flugkörper (01) nach einem der vorangehenden Ansprüche,
**dadurch gekennzeichnet, dass**
an den Außenenden (15, 18) der Tragflächen (16, 19) zumindest die Sensoren (12) für die Erfassung der Flugposition angeordnet sind.

9. Flugkörper (01) nach einem der vorangehenden Ansprüche,
**dadurch gekennzeichnet, dass**
eine drahtlose bidirektionale Datenübertragungseinrichtung (37) vorgesehen ist.

10. Flugkörper (01) nach einem der vorangehenden Ansprüche,
**dadurch gekennzeichnet, dass**
die beiden ersten Windleitflächen (25) parallel und die beiden zweiten Windleitflächen (26) orthogonal zu den Tragflächen (16,19) angeordnet sind.

11. Flugkörper (01) nach einem der vorangehenden Ansprüche,
**dadurch gekennzeichnet, dass**
an den beiden ersten Windleitflächen (25) feststehende, angewinkelte Heckflossen (29) angeordnet sind, die in Richtung auf den Bugbereich (05) des Flugkörpers (01) um 4° bis 6°, insbesondere um 5° zur Längsachse (23) hin geneigt sind.

12. Flugkörper (01) nach einem der vorangehenden Ansprüche 1 bis 10 oder nach Anspruch 11,
**dadurch gekennzeichnet, dass**
direkt am Flugkörper (01) und/oder an den Heckflossen (29) Landeklappen (76), die auch von dem automatischen Flugkontrollsystem (32) angesteuert sind, angeordnet sind.

13. Flugkörper (01) nach einem der vorangehenden Ansprüche,
**dadurch gekennzeichnet, dass**
im Heckbereich (22) des Flugkörpers (01) ein feststehender, kegelstumpfförmiger Heckanbau (38) angeordnet ist.

14. Flugkörper (01) nach einem der vorangehenden Ansprüche,
**dadurch gekennzeichnet, dass**
im Heckbereich (22) des Flugkörpers (01) ein strömungsgetriebener Generator (39) zum Nachladen der Akkumulatoren (30) während des Fluges angeordnet ist.

## Claims

1. A cylindrical active flying object (01) for determining measurement data, the flying object being capable of being towed through the air by a powered aircraft by means of a carrying cable (02), which can be latched in the middle region (03) of the flying object (01), at least comprising
• sensors (06, 12) for determining the measurement data and the flight position of the flying object (01),
• two wings (16, 19) arranged in the middle region (03) of the flying object (01),
• a plurality of airfoils (24) arranged in the rear region (22) of the flying object (01) radially about its longitudinal axis (23) and comprising
• electrical adjusting devices (20) for opposite first airfoils (25) and second airfoils (26), wherein the adjusting device (20) of the two first airfoils (25) is embodied as elevator (27) and the adjusting device (20) of the two second airfoils (26) is embodied as rudder (28),
**characterized in that**
• the two wings (16, 19) arranged in the middle region (03) of the flying object (01) are embodied in an adjustable manner to change the vertical flight position of the flying object (01) and are connected to electrical adjusting devices (20), which are embodied as aileron (21),
• provision being made for a computer-supported control device (31), which has an automatic flight control system (32), at least for self-acting control of the vertical flight position of the flying object (01), and which comprises a malfunction module (35), which is activated in response to a malfunction, by means of which at least the electrical adjusting devices (20) for the wings (16, 19) are placed into a non-deflected initial position,
• the electrical adjusting devices (20) for the opposite first airfoils (25) and second airfoils (26) are also controlled by the automatic flight control system (32),
• the automatic flight control system (32) comprises an evasion module (34), which is embodied to automatically adjust the ailerons, elevators and rudders (21, 27, 28) in such a manner that the towed flying object (01) avoids obstacles determined by the sensors (12) with a predetermined measurement frequency by optimally changing the flight position of said flying object,
• the automatic flight control system (32) comprises a stabilisation module (33) for flight stabilization of the flying object (01), which is embodied to automatically adjust the ailerons, elevators and rudders (21, 27, 28) in such a manner that the flight position of the towed flying object (01) is stabilized, wherein, when retrieving the flying object (01) underneath the aircraft, the measurement frequency of the sensors (12) is increased as a function of the distance between the flying object (01) and the aircraft,
• the malfunction module (35) comprises an electromechanical malfunction system (36), which is activated automatically in response to a failure of its electrical power supply and by means of which the ailerons, elevators and rudders (21, 27, 28) are moved into their non-deflected initial position and are locked therein, and that
• provision is made for batteries (30) for the electrical power supply.

2. The flying object (01) according to claim 1,
**characterized in that**
the measurement frequency is increased to 5 Hz starting at a distance of 5 m between the flying object (01) and the aircraft.

3. The flying object (01) according to claim 1 or 2,
**characterized in**
**that** the failure of the electrical power supply of the electromechanical malfunction system (36) is caused by a depletion of the batteries (30) as a possible malfunction or by the activation of a fault detector (74) in the case of other malfunctions or by manual intervention.

4. The flying object (01) according to one of the preceding claims,
**characterized in that**
the malfunction system (36) has an electromagnetic coil (62), which, in the live state, holds a spring-loaded ratchet lever (60) and releases the latter in the dead state, whereby a spring-loaded angle lever (52) passes from a first position (A) into a second position (B) and moves the ailerons, elevators and rudders (21, 27, 28) into the non-deflected initial position and locks them there via a first control axis (47), which is guided in a sliding block guide (46) and which is also transitioned into a second position (B) by means of the angle lever (52), via a lever arm (48) and via a second control axis (50).

5. The flying object (01) according to claim 4,
**characterized in that**
the malfunction system (36) automatically displays a clearly visible signal flag (65) in response to an activation.

6. The flying object (01) according to one of the preceding claims,
**characterized in that**
the sensors (12) for determining the flight position of the flying object (01) comprise at least one of a forward-looking infrared camera system (13), a video camera system (14), a laser-supported distance measurement system (71), a radar-supported altitude measurement system (72), a satellite-supported positioning system (73) and/or a metrological measurement system (17).

7. The flying object (01) according to one of the preceding claims,
**characterized in that**
provision is made in the nose region (05) of the flying object (01) for a compact measuring module (07), which includes at least part of the sensors (06) for acquisition of the measurement data and which can be replaced easily.

8. The flying object (01) according to one of the preceding claims,
**characterized in that**
at least the sensors (12) for acquiring the flight position are arranged on the outer ends (15, 18) of the wings (16, 19).

9. The flying object (01) according to one of the preceding claims,
**characterized in that**
provision is made for a wireless bidirectional data transmission device (37).

10. The flying object (01) according to one of the preceding claims,
**characterized in that**
the two first airfoils (25) are arranged in parallel and the two second airfoils (26) are arranged orthogonally to the wings (16, 19).

11. The flying object (01) according to one of the preceding claims,
**characterized in that**
stationary, angled tail fins (29), which are inclined by 4° to 6°, in particular by 5° to the longitudinal axis (23) in the direction of the nose region (05) of the flying object (01), are arranged on the two first airfoils (25).

12. The flying object (01) according to one of the preceding claims 1 to 10 or according to claim 11,
**characterized in that**
landing flaps (76), which are also controlled by the automatic flight control system (32), are arranged directly on the flying object (01) and/or on the tail fins (29).

13. The flying object (01) according to one of the preceding claims,
**characterized in that**
a stationary, truncated cone-shaped rear-mounted structure (38) is arranged in the rear region (22) of the flying object (01).

14. The flying object (01) according to one of the preceding claims,
**characterized in that**
a flow-driven generator (39) for recharging the batteries (30) during flight is arranged in the rear region (22) of the flying object (01).

## Revendications

1. Engin guidé (01) actif cylindrique destiné à déterminer des données de mesure, qui au moyen d'un câble porteur (02) susceptible de s'encliqueter dans une zone centrale (03) de l'engin guidé (01) est remorquable dans l'air par un engin volant, avec au moins
des capteurs (06, 12) destinés à déterminer les données de mesure et la position de vol de l'engin guidé (01),
• deux surfaces porteuses (16, 19) placées dans la zone centrale (03) de l'engin guidé (01),
• plusieurs surfaces déflectrices d'air (24) placées dans la zone arrière (22) de l'engin guidé (01), de manière radiale autour de son axe longitudinal (23)
• des dispositifs d'ajustage (20) électriques pour des premières surfaces déflectrices d'air (25) et des deuxièmes surfaces déflectrices d'air (26) opposées, le dispositif d'ajustage (20) des deux premières surfaces déflectrices d'air (25) étant conçu en tant que gouvernail de profondeur (27) et le dispositif d'ajustage (20) des deux deuxièmes surfaces déflectrices d'air (26) étant conçu en tant que gouvernail de direction (28),
• **caractérisé en ce**
• **que** pour modifier la position de vol verticale de l'engin guidé (01), les deux surfaces porteuses (16, 19) placées dans la zone centrale (03) de l'engin guidé (01) sont conçues en étant ajustables et sont reliées avec des dispositifs d'ajustage (20) électriques, qui sont conçus en tant qu'ailerons (21)
• **qu'**il est prévu un système de commande (31) assisté par ordinateur qui comporte un système automatique de contrôle (32) du vol au moins pour la commande automatique de la position de vol verticale de l'engin guidé (01) qui comprend un module de dysfonctionnement (35) activé lors d'un dysfonctionnement, avec lequel au moins les dispositifs d'ajustage (20) électriques pour les surfaces porteuses (16, 19) sont placés dans une position initiale non déviée,
• **que** les dispositifs d'ajustage (20) électriques pour les premières surfaces déflectrices d'air (25) et les deuxièmes surfaces déflectrices d'air (26) opposées sont également actionnées également par le système automatique de contrôle (32) du vol,
• **que** le système automatique de contrôle (32) du vol comprend un module d'évitement (34) qui est conçu pour ajuster automatiquement les ailerons, gouvernail de profondeur et gouvernail de direction (21, 27, 28) de telle sorte que l'engin guidé (01) remorqué évite des obstacles qui sont déterminés par les capteurs (12) à une fréquence de mesure prédéfinie par des modifications optimales de sa position de vol,
• **que** le système automatique de contrôle (32) du vol comprend un module de stabilisation (33) pour la stabilisation du vol de l'engin guidé (01), qui est conçu pour ajuster automatiquement les ailerons, gouvernail de profondeur et gouvernail de direction (21, 27, 28) de telle sorte que la position de vol de l'engin guidé (01) remorqué soit stabilisée, lorsque l'engin guidé (01) rentre sous l'engin volant, en fonction de l'écart entre l'engin guidé (01) et l'engin volant, la fréquence de mesure (12) étant augmentée,
• le module de dysfonctionnement (35) comprend un système électromécanique de dysfonctionnement (36), qui lors d'une panne de son alimentation en énergie électrique est automatique activé et à l'aide duquel les ailerons, gouvernail de profondeur et gouvernail de direction (21, 27, 28) sont déplacés dans leur position initiale non déviée et y sont verrouillés et en ce que
• des accumulateurs (30) sont prévus pour l'alimentation en énergie électrique.

2. Engin guidé (01) selon la revendication 1,
**caractérisé en ce**
**qu'**à partir d'un écart de 5 m entre l'engin guidé (01) et l'engin volant, la fréquence de mesure est augmentée à 5 Hz.

3. Engin guidé (01) selon la revendication 1 ou la revendication 2,
**caractérisé en ce que**
la panne de l'alimentation en énergie électrique du système électromécanique de dysfonctionnement (36) est provoquée par une décharge des accumulateurs (30) en tant que dysfonctionnement possible ou par le déclenchement d'un détecteur de défauts (74) dans le cas d'autres dysfonctionnements ou par intervention manuelle.

4. Engin guidé (01) selon l'une quelconque des revendications précédentes, **caractérisé en ce que**
le système de dysfonctionnement (36) comporte une bobine (62) électromagnétique, qui lorsqu'elle est traversée par du courant retient un levier à cliquet (60) contraint par ressort et en l'absence de courant, libère celui-ci, suite à quoi, un levier coudé (52) contraint par ressort passe d'une première position (A) dans une deuxième position (B) et par l'intermédiaire d'un premier axe de commande (47) guidé dans un guidage à coulisse (46) que le levier coudé (52) passe également dans une deuxième position (B), un bras de levier (48) et un deuxième axe de commande (50), déplace les ailerons, gouvernail de profondeur et gouvernail de direction (21, 27, 28) dans la position initiale non déviée et les y verrouille.

5. Engin guidé (01) selon la revendication 4,
**caractérisé en ce que**
lors d'une activation, le système de dysfonctionnement (36) affiche automatiquement un drapeau de signalisation (65) nettement visible.

6. Engin guidé (01) selon l'une quelconque des revendications précédentes,
**caractérisé en ce que**
pour déterminer la position de vol de l'engin guidé (01), les capteurs (12) comprennent au moins un système photographique infrarouge (13) prédictif, un système de caméra vidéo (14) un système télémétrique (71) assisté par laser, un système altimétrique (72) assisté par radar, un système radiogoniométrique (73) assisté par satellite et/ou un système de mesure météorologique (17).

7. Engin guidé (01) selon l'une quelconque des revendications précédentes,
**caractérisé en ce que**
dans la zone du nez (05) de l'engin guidé (01), il est prévu un module de mesure (07) compact, qui contient au moins une partie des capteurs (06) destinés à déterminer les données de mesure et qui est facilement interchangeable.

8. Engin guidé (01) selon l'une quelconque des revendications précédentes,
**caractérisé en ce que**
sur les extrémités extérieures (15, 18) des surfaces porteuses (16, 19) sont placés au moins les capteurs (12) destinés à détecter la position de vol.

9. Engin guidé (01) selon l'une quelconque des revendications précédentes,
**caractérisé en ce**
**qu'**il est prévu un système bidirectionnel de transfert de données (37) sans fil.

10. Engin guidé (01) selon l'une quelconque des revendications précédentes,
**caractérisé en ce que**
les deux premières surfaces déflectrices d'air (25) sont placées à la parallèle et le deux deuxièmes surfaces déflectrices d'air (26) sont placées à l'orthogonale des surfaces porteuses (16, 19).

11. Engin guidé (01) selon l'une quelconque des revendications précédentes,
**caractérisé en ce que**
sur les deux premières surfaces déflectrices d'air (25) sont placés des ailerons arrière (29) stationnaires repliés, qui en direction vers la zone du nez (05) de l'engin guidé (01) sont inclinés de 4° à 6°, notamment de 5° vers l'axe longitudinal (23).

12. Engin guidé (01) selon l'une quelconque des revendications précédentes,
**caractérisé en ce que**
directement sur l'engin guidé (01) et/ou sur les ailerons arrière (29) sont placés des volets d'atterrissage (76) qui sont également actionnés par le système automatique de contrôle (32) du vol.

13. Engin guidé (01) selon l'une quelconque des revendications précédentes,
**caractérisé en ce que**
dans la zone arrière (22) de l'engin guidé (01) est placée une annexe arrière (38) stationnaire, de forme tronconique.

14. Engin guidé (01) selon l'une quelconque des revendications précédentes,
**caractérisé en ce que**
dans la zone arrière (22) de l'engin guidé (01) est placé un générateur (39) entraîné par courants pour recharger les accumulateurs (30) en vol.
